# EUROPEAN PATENT APPLICATION

(11) **EP 1 428 900 A1**
(43) Date of publication of application: **16.06.2004**
(21) Application number: 03028413.7
(22) Date of filing: 11.12.2003
(51) Int. Cl.: C23C 4/10, C04B 41/45, C04B 35/565

(54) **Silicon carbide-based thermal spray powder, method of preparation and use**

(30) Priority: 12.12.2002 IT rm20020618
(71) Applicant: CENTRO SVILUPPO MATERIALI S.p.A., 00128 Roma (IT)
(72) Inventor: Tului, Mario, Via di castel Romano 100 00128 Roma (IT); Valente, Teodoro, Via di castel Romano 100 00128 Roma (IT)
(74) Representative: Gervasi, Gemma, Dr.

(57) **Abstract**

A silicon carbide-based thermal spray powder contains at least one boride chosen from zirconium boride, titanium boride and hafnium boride. The powder is prepared by mixing and aggregation of powders containing the compounds in question. Said thermal spray powder is used to deposit, via the plasma spraying technique, a silicon carbide-based coating on a metallic or non-metallic substrate. The figure shows the X-ray crystallogram obtained, for a silicon carbide-based powder, according to the invention, after thermal spraying. The substantial identity of this crystallogram with the one obtained prior to thermal spraying demonstrates that the silicon carbide has been deposited on the substrate without decomposing.

## Description

The present invention refers to the sector of thermal spray coatings, resistant to wear, high temperature, erosion and corrosion.

As is known, silicon carbide (SiC), due to its chemical-physical properties, is a very attractive material for coatings of this type. However, thermal spraying of pure silicon carbide is not possible due to the decomposition of this molecule at high temperatures (v. M. Hansen, K. Anderko: "Constitution of binary alloys"; McGraw & Hill, 1958).

In this regard it should be remembered that in the Si-C binary system phase diagram, the Si-C compound decomposes peritectically at 2700°C.

The present invention concerns a silicon carbide-based powder which can be thermal-sprayed, on a metallic or non-metallic substrate, avoiding decomposition of the SiC molecule.

The subject of this invention is, in fact, a thermal spray powder based on silicon carbide (SiC) and containing at least one boride chosen from the group comprising zirconium boride (ZrB₂), titanium boride (TiB₂) and hafnium boride (HfB₂).

The thermal spray powder according to the invention can contain preferably 5-40%, and more preferably 10-25% in weight of zirconium, titanium or hafnium borides, the remaining part being silicon carbide, apart from the inevitable impurities.

The thermal spray powder according to the invention can have the form of spherical particles with diameter between 10 and 150 µm, preferably between 20 and 80 µm.

The invention also concerns a process for preparation of the above thermal spray powder, in which SiC powder and powder of at least one Zr, Ti and/or Hf boride are mixed and aggregated.

The mixing and aggregation can be obtained by means of the spray dryer technique, if necessary followed by sintering.

The invention also concerns a method for the preparation of a composite material with metallic or non-metallic substrate and SiC-based coating, in which the thermal spray powder described above is deposited on the substrate via the plasma spraying technique.

The invention also concerns the composite material which can be obtained by the method defined above.

The coatings, which can be obtained by removal of the metallic or non-metallic substrate from the above composite materials (for example by machining or chemical etching), can be used as independent components and are also the subject of the present invention.

So far a general description of the present invention has been given. With reference to the following figures and examples a more detailed description of specific forms of embodiment will now be provided for a better understanding of the purposes, characteristics, advantages and operating modes of the invention.

Figure 1A shows a scanning electron microscopy (SEM) micrograph of a mixture of powders SiC + 25% ZrB₂ after agglomeration by means of the spray dryer technique.

Figure 1B shows the same image obtained on a mixture of powders SiC + 10% ZrB₂ after agglomeration.

Figures 2A and 2B show X-ray crystallograms of mixtures of powders of SiC and ZrB₂ in the respective proportions SiC + 25% ZrB₂ (2A) and SiC + 10% ZrB₂ (2B).

Figures 3A and 3B show X-ray crystallograms of coatings obtained by thermal spraying of the same powders SiC + 25% ZrB₂ (3A) and SiC + 10% ZrB₂ (3B).

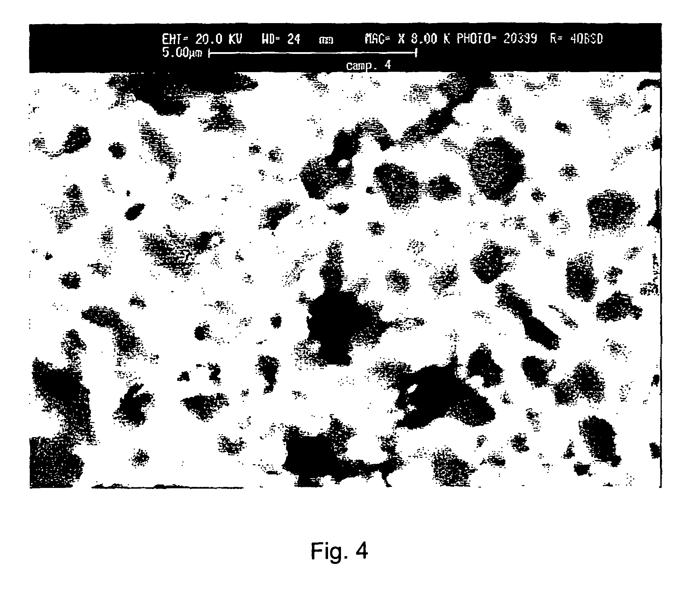

Figure 4 shows a scanning electron microscopy (SEM) high magnification micrograph of the section of the coating in figure 3A.

### EXAMPLE

Two SiC-based powders containing 25% in weight of ZrB₂ and 10% in weight of ZrB₂ respectively are prepared by mixing together the two ceramic materials in powder form with mean granulometry of 0.7 µm and 5 µm respectively.

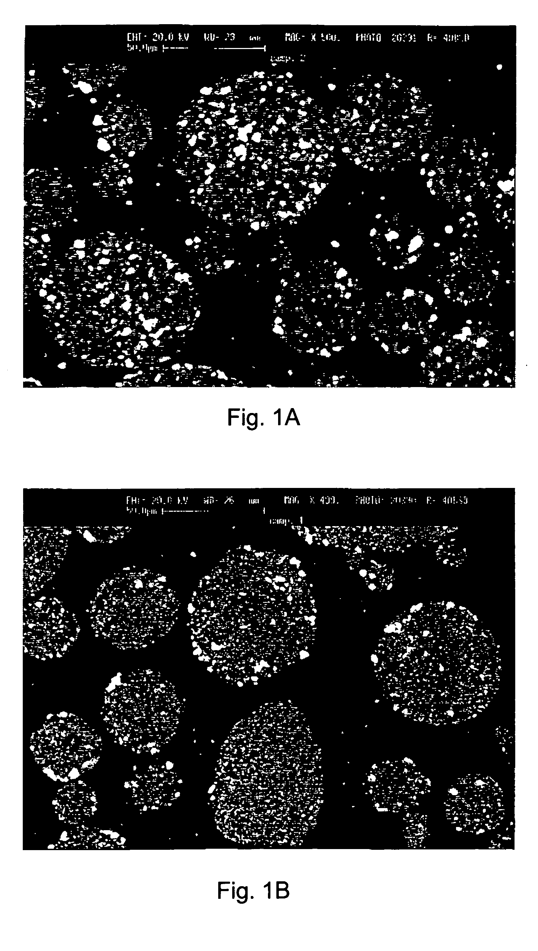

Mixing is performed wet and the resulting suspension is atomised with a flow of compressed air at 520°K, thus obtaining a powder suitable for use in a plasma spraying system, as confirmed by the micrographs in figures 1A and 1B which show how the two ceramic phases are well mixed together (in the figures, the ZrB₂ phase is a brilliant white colour, while the SiC phase is light grey).

The powders were sprayed with a plasma torch, maximum power 80 KW. This torch was installed in a sealed chamber, in order to control the composition and pressure of the atmosphere.

Samples of AISI 304 stainless steel were used as substrate, with dimensions 50x30x3 mm.

Two separate deposition tests were performed with each of the two powders: one in air and one in an inert atmosphere.

During the air test the deposition chamber was kept at ambient pressure.

In the case of the inert atmosphere test, before beginning deposition, the chamber was evacuated to a vacuum level of 2 Pa. Argon was then introduced until a pressure of 900 kPa was reached.

In both cases the deposition process was performed according to the following parameters:
- plasma gas flow: 47 SLPM of argon plus 10 SLPM of hydrogen (SLPM = standard litres per minute);
- electric arc power: 42 kW;
- distance of torch from substrate: 110 mm;
- powder feed rate: 7 g/minute;
- number of torch scans on substrate: 75.

During deposition the substrate did not exceed the temperature of 500°K. This situation was obtained by cooling the substrate with a flow of argon at ambient temperature.

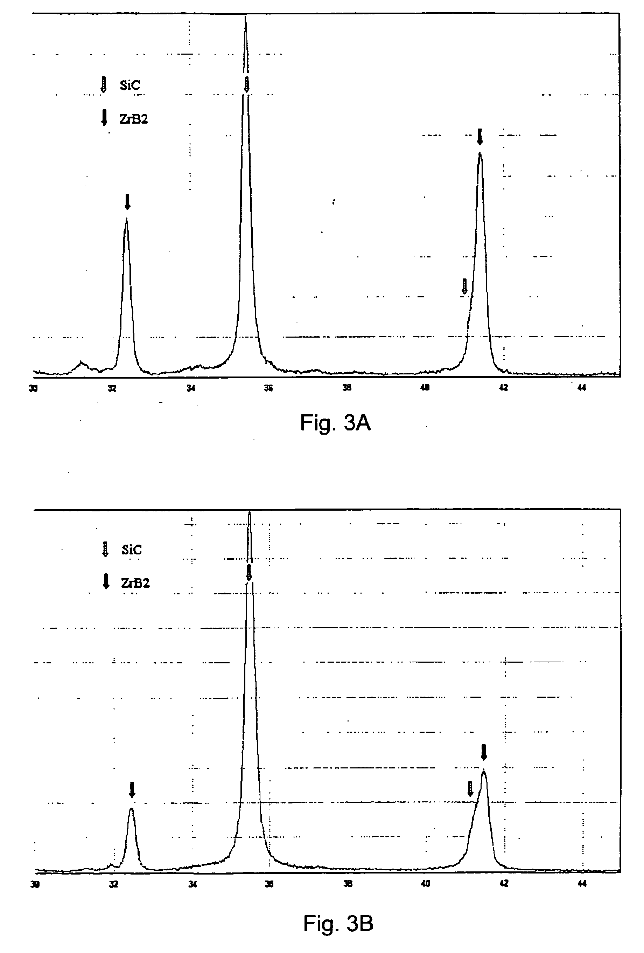

At the end of the deposition process the sample was taken out of the chamber and an X-ray crystallogram of the coating obtained was performed. Figures 3A and 3B show the crystallograms of the air powder depositions consisting of SiC + 25% ZrB₂ (3A) and SiC + 10% ZrB₂(3B) respectively.

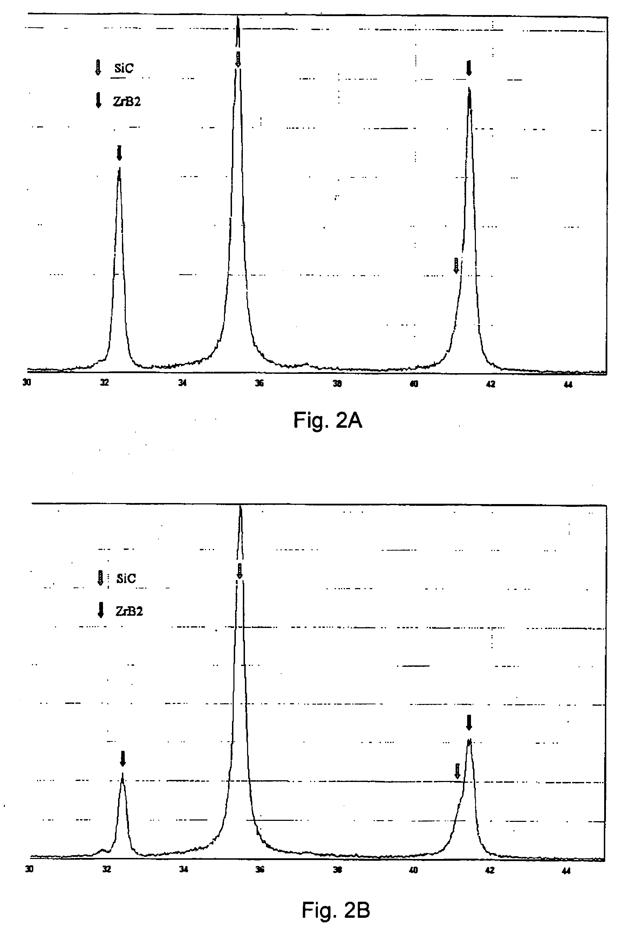

These crystallograms were compared with those performed on the powder mixture before deposition (figures 2A and 2B). As can be seen, the spectrums relating to the same compositions can be practically superimposed. This means that during plasma deposition no decomposition has occurred. In figures 2 and 3 the positions of the peaks of the two compounds that make up the powder and coating respectively are marked.

A scanning electron microscopy (SEM) high magnification micrograph of the section of the coating in fig. 3 A was then performed. The typical structure of eutectic high speed solidification is evident.

EDS, Energy Dispersion Spectrometry (which identifies the chemical composition), showed that the dark grey parts are SiC, surrounded by a matrix (the white part) containing ZrB₂ and SiC.

## Claims

1. Thermal spray powder, **characterised in that** it is based on silicon carbide (SiC) and contains at least one boride chosen from the group comprising zirconium boride (ZrB₂), titanium boride (TiB₂) and hafnium boride (HfB₂).

2. Thermal spray powder as in claim 1, **characterised in that** said boride is present between 5% and 40% in weight.

3. Thermal spray powder as in claim 2, in which the weight percentage of said boride is between 10 and 25.

4. Thermal spray powder according to claim 1 **characterised in that** it is in the form of spherical particles with diameter between 10 and 150 µm.

5. Thermal spray powder as in claim 4, in the form of spherical particles with diameter between 20 and 80 µm.

6. Process for preparation of the thermal spray powder as in claim 1, **characterised in that** a SiC powder and powders of at least one boride chosen from Zr, Ti and/or Hf borides are mixed and aggregated.

7. Process for preparation of the thermal spray powder as in claim 6, in which the SiC and ZrB₂, TiB₂ and/or HfB₂ powders are mixed and aggregated by means of the spray dryer technique, followed by sintering if necessary.

8. Method for the preparation of a composite material with metallic or non-metallic substrate and SiC-based coating, **characterised in that** a thermal spray powder according to claim 1 is deposited on said substrate by means of the plasma spraying technique.

9. Composite material, **characterised in that** it is prepared by means of the method in claim 8.

10. Material with high resistance to wear, corrosion, erosion and high temperature, **characterised in that** it is prepared from the composite material of claim 9 by removal of said substrate by machining or chemical etching.
